# FASCICULE DE BREVET EUROPEEN

(11) **EP 1 108 773 B1**
(45) Date de publication et mention de la délivrance du brevet: **11.05.2005**
(21) Numéro de dépôt: 00403097.9
(22) Date de dépôt: 08.11.2000
(51) Int. Cl.: C09K 13/08, C03C 15/02

(54) **Compositions pour le dépolissage du verre, bains d'attaque acide, procédé de dépolissage du verre et objets dépolis**
Zusammensetzung für Aufrauhung von Glas, Ätzbad, Verfahren zur Aufrauhung von Glas und aufgerauhten Gegenständen
Composition for roughening glass, etching bath, process for roughening glass and roughened objects

(30) Priorité: 16.12.1999 FR 9915887
(43) Date de publication de la demande: 20.06.2001
(73) Titulaire: SOCIETE D'EXPLOITATION DE PRODUITS POUR LES INDUSTRIES CHIMIQUES, S.E.P.P.I.C., 75321 Paris Cédex 07 (FR)
(72) Inventeur: Bessoles, Yves, 81100 Castres (FR); Guy, François, 81710 Saix (FR); Trouve, Gérard, 81100 Castres (FR)
(74) Mandataire: Conan, Philippe Claude

(56) Documents cités:
- DD-A- 153 360
- GB-A- 2 055 792
- PATENT ABSTRACTS OF JAPAN vol. 1996, no. 04, 30 avril 1996 (1996-04-30) & JP 07 334841 A (FUJI ELECTRIC CO LTD), 22 décembre 1995 (1995-12-22)
- DATABASE WPI Section Ch, Week 198332 Derwent Publications Ltd., London, GB; Class L01, AN 1983-733140 XP002145621 & SU 962 233 A (KONDAKOVA L V), 30 septembre 1982 (1982-09-30)

## Description

L'invention concerne de nouvelles compositions chimiques, le procédé pour leur préparation et leur utilisation pour dépolir le verre.

On appelle dépolissage d'une lame de verre, l'action de le rendre translucide, sans être transparent en engendrant une opacité de l'une de ses surfaces. Il résulte de cette action, une multitude d'aspérités de quelques microns de profondeur qui selon leur taille, conduisent à différents aspects macroscopiques de la surface ainsi traitée. On parle alors de verres dépolis brillants, de verres dépolis mats, de verres opaques ou de verres translucides.

Le dépolissage est généralement réalisé par sablage de la surface, quand elle est de grandes dimensions, par dépôt d'une couche mince ou par attaque chimique. Ce dernier procédé plus particulièrement mis en oeuvre sur des petites surfaces ou sur des objets de forme plus ou moins compliquées. L'attaque chimique est souvent réalisée à l'aide d'ions fluorure, ceux-ci réagissant avec les ions silicium du verre. L'objet en verre est immergé, de quelques secondes à quelques minutes, soit dans un bain d'acide fluorhydrique concentré, soit dans un bain acide contenant un initiateur d'ions fluorure, comme le bifluorure d'ammonium. Le verre est ensuite rincé à l'eau.

Comme exemples de compositions connues de dépolissage du verre, il y a celle décrite dans le brevet allemand publié sous le numéro 1596961 qui contient de l'acide fluorhydrique de l'hydrogénofluorure d'ammonium, appelé par la suite bifluorure d'ammonium, et de l'eau, celle décrite dans le brevet anglais publié sous le numéro 1.276.550 comprenant de l'acide fluorhydrique, un fluorure hydrosoluble, comme le bifluorure d'ammonium et un ou plusieurs acides aliphatiques carboxyliques comprenant de un à trois atomes de carbone, substitués ou non substitués par des radicaux comprenant un ou plusieurs atomes d'halogène, groupes hydroxy ou amino, comme l'acide formique, l'acide acétique, l'acide propionique, l'acide monochloroacétique, l'acide trichtoroacétique ou l'acide glycolique ou encore, la composition décrite dans le brevet russe publié sous le numéro SU 1 675 244, comprenant de l'acide fluorhydrique, du bifluorure d'ammonium, du fluorosilicate de sodium, du fluorosilicate de potassium et de l'eau.

La demande de brevet Est-allemand DD 153 360 divulgue une pâte de dépolissage comprenant du bifluorure de potassium, du dichlorure d'étain, du tétrafluoroborure de potassium, du fluorure d'ammonium et l'acide fluorhydrique.

L'association du bifluorure d'ammonium et de l'acide fluorhydrique permet d'améliorer à la fois l'efficacité de l'attaque chimique et l'aspect du verre dépoli obtenu. Par contre la réaction chimique mise en oeuvre, induit aussi la formation d'ammoniaque, qui rend nécessaire un traitement supplémentaire coûteux et difficile à réaliser, des effluents industriels, pour répondre aux normes européennes de rejets. Les limites fixées par ces normes varient selon les rivières ; on admet cependant, qu'un taux moyen d'ammoniaque inférieur ou égal à 1 mg /dm³, constitue une valeur moyenne acceptable. Or, il a déjà été montré, que le rejet de bains d'attaques acides, induit ponctuellement des concentrations d'ammoniaque dans une rivière jusqu'à 3 à 5 fois la norme maximale autorisée.

Pour pallier cet inconvénient, on a naturellement cherché à remplacer le bifluorure d'ammonium par le bifluorure de sodium ou le bifluorure de potassium. Comme exemples de compositions sans sel d'ammonium, il y a celle décrite dans la demande de brevet japonais publiée sous le numéro 334841/1995, qui contient de l'acide fluorhydrique, du bifluorure de potassium et de l'eau ou celle décrite dans la demande de brevet brésilien publiée sous le numéro 85 01205, qui contient de l'acide fluorhydrique, du bifluorure de potassium, du fluorure de sodium, de l'acide oxalique, de la glycérine et de la baryte. Cependant on a constaté que les compositions de polissages comprenant des bifluorures de sels alcalins, ne sont satisfaisantes que si elles contiennent aussi de l'acide fluorhydrique.

De plus l'acide fluorhydrique est dangereux à stocker ou à manipuler et il est relativement cher. C'est pourquoi il existe sur le marché, des produits de dépalissage qui contiennent de l'acide chlorhydrique à la place de l'acide fluorhydrique. Cependant, ces formulations contiennent aussi du bifluorure d'ammonium, qui est, à ce jour, le seul sel fluoré connu, conduisant, en association avec l'acide chlorhydrique, à des verres dépolis opaques et homogènes. La demanderesse a donc cherché à mettre au point de nouvelles compositions de dépolissage du verre, qui soient aussi performantes que delles de l'état de la technique, sans qu'il y ait nécessité de manipuler de l'acide fluorhydrique et qui contiennent une quantité minimum de sel d'ammonium.

C'est pourquoi, selon un premier aspect, l'invention a objet une composition exempte d'acide fluorhydrique, caractérisée en ce qu'elle comprend de 20% à 99% en poids, de bifluorure de potassium et de 1% à 80% en poids, d'au moins un sel de cation multivalent hydrosoluble choisi parmi les sels divalents ou trivalents de calcium, de magnésium, de zinc, de fer ou d'aluminium. La composition telle que définie ci-dessus, peut aussi comprendre du bifluorure de sodium, et du bifluorure d'ammonium ou d'un mélange de bifluorure de sodium et de bifluorure d'ammonium. Cependant, lorsqu'elle comprend du bifluorure d'ammonium elle en comprend moins de 15% en poids et de préférence elle n'en comprend qu'au plus 5% en poids ; lorsqu'elle comprend du bifluorure de sodium elle n'en comprend qu'une quantité inférieure ou égale à celle du bifluorure de potassium ; lorsqu'elle comprend à la fois du bifluorure d'ammonium et du bifluorure de sodium, la quantité totale en ces deux bifluorures n'excède jamais celle en bifluorure de potassium. Selon un aspect particulier de la présente invention, la composition ne contient pas de bifluorure d'ammonium.

La composition comprend éventuellement de 5% à 60% en poids et plus particulièrement, de 10% à 30% en poids, d'au moins une charge insoluble dans l'eau, choisie par les produits minéraux ou organiques, stables en milieu acide.

Comme charge insoluble stable en milieu acide, il y a par exemple, la baryte ou sulfate de baryum, le gypse, les fluorures insolubles comme le fluorure de calcium, les fluorosilicates insolubles comme le fluorosilicate de sodium ou le fluorosilicate de calcium, le phosphate de calcium, le sulfate de calcium, les oxydes minéraux, en particulier les oxydes de fer, de zinc ou de titane, les sucres et leurs polymères, tels que la cellulose ou ses dérivés, la lignine, l'amidon, les polymères d'oxyde d'éthylène, les polymères d'oxyde de propylène ou les polymères d'oxyde de butylène de haut poids moléculaire ; les acides gras et leurs dérivés solides à température ambiante, les polymères et résines insolubles de hauts poids moléculaires.

La composition telle que définie précédemment, peut aussi comprendre de 0,2 % à 6% en poids et plus particulièrement, de 1% à 2% en poids, d'un ou plusieurs agents tensioactifs stables en milieu acide, tels que par exemple, les alcools gras alcoxylés, les alcools gras phosphatés, les alcools gras alcoxylés phosphatés, les copolymères d'oxyde d'éthylène et de propylène, les amides grasses ou les agents tensioactifs cationiques ou les dérivés fluorés desdits agents tensioactifs. les agents tensioactifs siliconés ou fluorosiliconés.

La composition telle que définie précédemment, comprend plus particulièrement de 1% à 60% en poids, notamment de 5% à 30% en poids. et plus spécifiquement, de 10% à 25% en poids d'au moins un sel de cation multivalent hydrosoluble.

La composition objet de la présente invention comprend plus particulièrement de 40% à 80% en poids, de bifluorure de potassium. Elle se présente généralement sous la forme d'un mélange de poudres, sous la forme de granulés, sous la forme de pastilles ou sous la forme de galets.

Selon un deuxième aspect de la présente invention, celle-ci à pour objet une solution de dépolissage du verre, caractérisée en ce qu'elle est susceptible d'être obtenue en mélangeant entre 0,1 kg et 5 kg et de préférence entre 0,5 kg et 5 kg de la composition telle que définie précédemment, par litre d'eau ou par litre d'une solution aqueuse d'un ou plusieurs acides minéraux ou organiques, étant entendu que l'acide minéral éventuellement présent dans ladite solution aqueuse avant le mélange avec ladite composition, n'est pas de l'acide fluorhydrique.

Selon un troisième aspect de la présente invention, celle-ci à pour objet une solution de dépolissage du verre, caractérisée en ce qu'elle est susceptible d'être obtenue en mélangeant simultanément ou successivement, de 0,1 kg à 4,95 kg de bifluorure de potassium et de 0,005 kg à 4 kg, d'au moins un sel de cation multivalent hydrosoluble choisi parmi les sels divalents ou trivalents de calcium, de magnésium, de zinc, de fer ou d'aluminium, par litre d'eau ou par litre d'une solution aqueuse d'un ou plusieurs acides minéraux ou organiques, étant entendu que l'acide minéral éventuellement présent dans ladite solution aqueuse avant le mélange avec ledit bifluorure et ledit sel de cation, n'est pas de l'acide fluorhydrique. Cette solution est obtenue en ajoutant éventuellement aussi du bifluorure de sodium en une quantité par litre d'eau ou de solution acide, inférieure ou égale à celle du bifluorure de potassium ou jusqu'à 0,75 kg et de préférence au plus 0,25 kg de bifluorure d'ammonium ou du bifluorure de sodium et du bifluorure d'ammonium, étant entendu que la quantité totale en ces deux bifluorures, est inférieure ou égale à la quantité de bifluorure de potassium et que la quantité de bifluorure d'ammonium ajoutée par litre d'eau ou par litre de solution acide est inférieure ou égale 0,75 kg et de préférence au plus 0,25 kg.

On peut éventuellement ajouter aussi de 0,025 kg à 3 kg et plus particulièrement de 0,05 kg à 1,5 kg d'au moins une charge insoluble dans l'eau choisie parmi les produits minéraux ou organiques stables en milieu acide, comme celle utilisée pour la composition sèche définie précédemment ; éventuellement ajouter aussi de 10⁻³ kg à 0,3 kg et de préférence de 5 10⁻³ kg à 0,1 kg, d'un ou plusieurs agents tensioactifs stables en milieu acide comme ceux utilisés pour la composition sèche définie précédemment.

Selon un aspect particulier ce cette solution de dépolissage, la proportion en sel de cation multivalent hydrosoluble mélangée, est de 0,005 kg à 3 kg, plus particulièrement de 0,025 kg à 1,5 kg et tout particulièrement de 0,05 kg à 1,25 kg par litre d'eau ou par litre de solution aqueuse acide. Le ou les sels de cations multivalents hydrosolubles utilisés sont les mêmes que ceux contenus dans la composition sèche, telle qu'elle est définie précédemment.

Selon un autre aspect particulier ce cette solution de dépolissage, la proportion en sel en bifluorure de potassium mélangé, est de 0,2 kg à 4 kg par litre d'eau ou par litre de solution aqueuse acide.

La solution aqueuse d'un ou plusieurs acides minéraux ou organiques est choisie parmi les solutions aqueuses d'acide chlorhydrique, d'acide sulfurique, d'acide phosphorique, d'acide nitrique, d'acide fluorosulfonique, d'acide citrique, d'acide tartrique, d'acide oxalique, d'acide acétique, d'acide propionique, d'acide succinique ou d'un de leurs mélanges. Il s'agit de préférence d'une solution aqueuse d'acide chlorhydrique.

La solution de dépolissage du verre telle que définie précédemment, peut être sous forme d'une pâte non coulante, auquel cas elle comprend aussi ou plusieurs agents épaississants ou liants stables aux acides.

Selon un quatrième aspect de la présente invention, celle-ci a pour objet, un procédé de dépolissage du verre, caractérisé en ce que la surface de l'objet en verre est mise en contact pendant en environ 0,5 seconde à environ 300 secondes, avec une solution de dépolissage, telle que définie précédemment, puis l'objet est rincé puis séché.

Selon une variante de ce procédé, la séquence de mise en contact puis de rinçage est répété plusieurs fois, plus particulièrement 2 à 4 fois.
Le choix du temps du temps de contact de la solution de dépolissage avec la surface à dépolir, comme le choix de nombres de cycles et comme celui de la concentration en acide présente dans la solution, dépendent notamment de l'effet de surface que l'on souhaite obtenir et de la composition du verre à dépolir.

Selon un dernier aspect de la présente invention, celle-ci a pour objet, les objets en verre dépoli, caractérisés en ce qu'ils sont dépolis par le procédé tel que défini précédemment.

Les exemples suivants illustrent l'invention sans toutefois la limiter.

### A) Détermination des paramètres

### a) La proportion de surface attaquée

La capacité de dépolissage d'un bain d'attaque peut être caractérisée par le pourcentage de surface attaquée et par la morphologie des reliefs obtenus, lorsque l'on y immerge des lames de verre pendant une durée déterminée, généralement de l'ordre d'une minute.

### b) L'opacité

Pour un verre attaqué sur 100% de sa surface, on caractérise l'intensité de l'effet d'opacité obtenu. Selon les bains d'attaque acide utilisés, on obtient des dépolis voilés, translucides ou opaques. Pour quantifier cette opacité, on place une lame du verre dépoli au-dessus d'un caractère typographique de la police de caractère "ARIAL 14", imprimé sur un transparent posé sur une table lumineuse. On observe le caractère typographique à travers une loupe. La lame de verre est progressivement éloignée du caractère typographique et l'on détermine ainsi la distance "d" à partir de laquelle ce caractère n'est plus distinguable. Plus la distance "d" est courte, plus le verre est opaque. Un verre totalement opaque conduit à une valeur de "d" égale à 0. Un verre transparent, non dépoli, conduit à une valeur de "d" infinie.

### B) Essai n° 1

### a) Attaque acide au bifluorure d'ammonium

On immerge pendant une minute, une lame de verre pour microscope optique dans une solution saturée de bifluorure d'ammonium dans de l'acide chlorhydrique à 32% dans l'eau. Après rinçage à l'eau et séchage, on évalue la proportion de surface attaquée, la taille des reliefs est estimée par observation microscopique et la "d" mesurée. On obtient un verre dépoli opaque caractérisé par une faible valeur de "d" ayant en surface des "reliefs" de grande taille et uniformément répartis.

### b) Attaque acide au bifluorure de sodium

En opérant de la manière qu'au paragraphe a), avec une solution saturée de bifluorure de sodium dans de l'acide chlorhydrique à 32%, on obtient un verre incomplètement dépoli et hétérogène. L'essai est refait dans des solutions d'acide sulfurique et d'acide fluorhydrique à 32% mais conduit aussi à des résultats non satisfaisants.

### c) Attaque acide au bifluorure de potassium

En opérant de la manière qu'au paragraphe a), avec une solution saturée de bifluorure de potassium dans de l'acide chlorhydrique à 32% dans l'eau, on obtient un verre complètement dépoli de façon homogène ayant des "reliefs" de petites tailles, n'induisant aucune opacité (valeur de "d" élevée). Le dépoli est d'un aspect "glacé" et inesthétique.

### d) Attaque acide avec des mélanges de bifluorure de potassium et de bifluorure d'ammonium

En opérant de la manière qu'au paragraphe a), avec une solution saturée en mélange de bifluorures de potassium et d'ammonium dans de l'acide chlorhydrique concentré, on obtient des verres dépolis plutôt translucides, dont l'opacité n'augmente pas de manière régulière avec la concentration en bifluorure d'ammonium.
Les résultats des essais 1a) à 1d), sont rassemblés dans le tableau suivant :

**Tableau 1:**

| Bifluorures mis en oeuvre | Solution aqueuse acide | Surface attaquée (en %) | Taille des reliefs (en µm) maxi / mini | "d" (en mm) |
|---|---|---|---|---|
| NH₄, HF₂ | HCI 32% | 100 | 40 / 2 | 9 |
| NaHF₂ | HCI 32% | 9 | 5 / 0,5 | nd |
| NaHF₂ | HF 32% | 10 | 13 / 0,5 | nd |
| NaHF₂ | H₂SO₄ 32% | 50 | 15 / 2 | nd |
| KHF₂ | HCI 32% | 100 | 5 / 1 | >130 |
| KHF₂+NH₄, HF₂ 50% / 50% | HCI 32% | 100 | 40 / 2 | >130 |
| KHF₂+NH₄HF₂ 70% / 30% | HCI 32% | 100 | 40 / 2 | 24 |
| KHF₂+NH₄, HF₂ 85%/15% | HCI 32% | 100 | 40 / 2 | 24 |

Cet essai démontre que le remplacement d'un bifluorure par un autre conduit à des résultats non prévisibles.

### C) Essai n° 2

En opérant de la manière qu'au paragraphe B a), avec différentes solutions saturées de bifluorure de potassium dans de l'acide chlorhydrique à 32% et contenant différents sels, on obtient les résultats rassemblés dans le tableau suivant :

**Tableau 2:**

| Sel | Concentration du sel (% en poids) | Taille des reliefs (en µm) maxi / mini | d (en mm) |
|---|---|---|---|
| Aucun | 0 | 15 / 2,5 | >130 |
| NaCI | 1 | 18 / 2,5 | >130 |
| NaCI | 5 | 15 / 2,5 | >130 |
| Na₂SO₄ | 1à 5 | 15 / 2,5 | >130 |
| Na₂SO₄ | 10 | 10 / 2,5 | >130 |
| KCI | 1 | 22 / 2,5 | >130 |
| KCI | 5 | 22 / 2,5 | >130 |
| K₂SiF₆ | 1 | 22 / 2,5 | >130 |
| K₂SiF₆ | 5 | 22 / 2,5 | >130 |
| K₂SO₄ | 5 | 22 / 2,5 | >130 |
| LiCI | 1 | 22 / 2,5 | >130 |
| Mncl₂ | 5 | 38 / 5 | 130 |
| CaCl₂ | 5 | 30 / 5 | 130 |
| CaCl₂ | 20 | 38 / 5 | 12 |
| MgCl₂ | 5 | 30 / 8 | 50 |
| MgCl₂ | 10 | 50 / 8 | 20 |
| MgCl₂ | 20 | 60 / 8 | 14 |
| FeCl₃ | 1 | 38 / 2,5 | 130 |
| FeCl₃ | 3 | 25 / 5 | 70 |
| FeCl₃ | 5 | 13 / 2,5 | 65 |
| FeCl₃ | 10 | 5 / 2,5 | 65 |
| Al₂O₃ | 5 | 35 / 5 | 35 |

Ces résultats font apparaître que, de manière tout à fait inattendue, la présence de sels solubles de cations multivalents, en particulier de cations divalents ou trivalents, dans les bains acides de dépolissage, induit la formations de reliefs de plus grandes tailles et permet d'aboutir à des dépolis d'opacité et d'aspect macroscopique, très voisins de ceux obtenus avec des solutions de bifluorure d'ammonium dans l'acide chlorhydrique ou encore avec des solutions d'acide fluorhydrique. Par contre, la présence de sels de cations monovalents n'apporte pas cet avantage. On peut notamment donc remplacer avantageusement les bains de dépolissage à base d'acide fluorhydrique et ou de bifluorure d'ammonium par des bains à base d'acide chlorhydrique, de bifluorure de potassium et de sels solubles de cations multivalents.

### D) Exemples de compositions

### a) Compositions témoins

On prépare une première solution témoin (composition **T**_{**1**}), constituée de 100 g de bifluorure de potassium dans 66 ml d'acide chlorhydrique à 32% dans l'eau.

On prépare une seconde composition témoin (composition **T**_{**2**}), constituée par 100 g de LERITE™ SX13, qui est une composition commerciale sous forme de poudre vendue par la société SEPPIC et dont le composant principal est du bifluorure d'ammonium, dans 40 ml d'acide chlorhydrique à 32%.

### b) Exemple 1

On prépare une composition **A** sans ammonium, en dispersant 100g de bifluorure de potassium dans 66 ml d'acide chlorhydrique à 32%. et en ajoutant dans le mélange résultant, 10 g de chlorure de magnésium (MgCl₂, 4,5 H₂O)

. On prépare une composition **B** sans ammonium, en dispersant 100g de bifluorure de potassium dans 66 ml d'acide chlorhydrique à 32%. et en ajoutant dans le mélange résultant, 10 g de sulfate de calcium.

Dans chacune de ces compositions on trempe des lames de verre sodo-calcique, pendant 1 minute, on les laisse s'égoutter 15 secondes, on les rince avec de l'eau puis on les sèche.

Les lames de verre attaquées par les compositions **A** et **B** ont un aspect dépoli homogène et opaque, équivalent à celui de la composition existante témoin **T**_{**2**} et beaucoup moins translucide que celui obtenu avec la composition témoin **T**_{**1**} sans sel de cation divalent. Les caractéristiques microscopiques de ces lames et leur opacité sont décrites dans le tableau 3.

**Tableau 3**

| Composition | Sel | Type de dépoli (opacité) | Taille des reliefs (en µm) maxi / mini | "d" (en mm) |
|---|---|---|---|---|
| T1 | aucun | voilé | 15 / 2,5 | >130 |
| T2 | aucun | opaque | 36 / 8 | 9 |
| A | MgCl₂ | opaque | 25 / 5 | 9 |
| B | CaSO₄ | opaque | 30 / 5 | 10 |

### c) Exemple 2

On prépare par un mélange de poudres contenant 78 g de bifluorure de potassium et 22g de sulfate de magnésium. Ce mélange de poudres s'écoule librement et ne motte pas au stockage dans le temps. On disperse ce mélange dans 51ml d'acide chlorhydrique à 32% (composition **D**).

On prépare par un mélange de poudres contenant 78 g de bifluorure de potassium et 22g de chlorure de calcium puis on disperse ce mélange dans 51ml d'acide chlorhydrique 32% (composition **E**).

On dépolit des lames de verre dans chacune des compositions D et E, comme décrit à l'exemple 1. Les lames de verre attaquées par les compositions **D** et **E** ont un aspect dépoli homogène opaque, voisin dans le cas la composition D, de celui induit par la composition témoin **T**_{**2**}, un peu moins opaque dans le cas de la composition E. Les caractéristiques microscopiques de ces lames et leur opacité sont décrites dans le tableau 4.

**Tableau 4**

| Composition | Sel | Type de dépoli (opacité) | Taille des reliefs (en µm) maxi / mini | "d" (en mm) |
|---|---|---|---|---|
| D | MgSO₄ | opaque | 30 / 5 | 9 |
| E | CaCl₂ | opaque/translucide | 20 / 5 | 13 |

### d) Exemple 3:

On prépare un mélange de poudres contenant 84 g de bifluorure de potassium et 16 g de différents sels de cations di ou trivalents. Ces mélanges de poudres s'écoulent librement et ne mottent pas au stockage dans le temps. Puis on disperse chacun de ces mélanges dans 55 ml d'acide chlorhydrique à 32%. On réalise alors le dépolissage de lames de verre comme indiqué à l'exemple 1. Les lames de verre attaquées par les différentes compositions, ont un aspect dépoli homogène et une opacité nettement améliorée par rapport à ceux obtenus avec la composition témoin T₁ sans sels. Les caractéristiques microscopiques de ces lames et leur opacité sont décrites dans le tableau 5.

**Tableau 5**

| Composition | Sel | Type de dépoli (opacité) | "d" (en mm) |
|---|---|---|---|
| F | MgCl₂ | opaque | 10 |
| G | MgCl₂ + Al₂O₃ (8 g+ 8g) | opaque | 8 |
| H | MgCl₂ + Al₂O₃ (11g + 5g) | opaque | 13 |
| I | FeCl₃ | opaque | 21 |
| J | CaCl₂ + MgSO₄ (8 g+ 8 g) | opaque | 11 |

### e) Exemple 4

On prépare un mélange de poudres contenant en poids 65% de bifluorure de potassium, 20% de sulfate de magnésium et 15% de baryte comme charge minérale insoluble. Ce mélange de poudres s'écoule facilement et ne motte pas lors du stockage. Il est dispersé dans de l'acide chlorhydrique à 32%; à raison de 100 kg de poudre pour 43 litres d'acide.

Le bain acide ainsi formé (composition **K**) est fluide et peut être maintenu agité sans problème avec un agitateur classique. Sa densité est égale à 1,68.

On réalise avec cette composition, le dépolissage de lames de verre ainsi que celui de flacons de parfums, selon le protocole décrit à l'exemple 1. Les lames et les flacons présentent un dépoli uniforme, très esthétique, d'opacité et de brillance équivalentes à celles obtenues sur les mêmes objets en verre avec la composition témoin T₂.La valeur d, mesurée pour les lames de verre est égale à 9.

### f) Exemple 5

On prépare un mélange de poudres identique à celui de l'exemple 4, auquel on ajoute un agent tensioactif fluoré, le BAYOWET™ FT 248, commercialisé par la société Bayer, dans la proportion de 0,4 kg d'agent tensioactif pour 100 kg de poudres. On obtient un mélange sec qui s'écoule librement et qui est dispersé dans de l'acide chlorhydrique à 32%, dans les mêmes proportions que celles indiquées à l'exemple 4. Le bain acide obtenu (composition **L**), est très fluide.

Environ 10 ml de ce bain sont injectés dans le culot d'ampoules électriques pendant un temps de l'ordre de 3 secondes, puis les ampoules électriques sont égouttées. On recommence cette séquence encore deux fois puis on rince à l'eau et sèche. L'aspect des ampoules dépolies est identique à celui d'ampoules traitées de la même manière par un bain de LERITE™ SX 13 (composition T₂).

### g) Exemple 6

On prépare un mélange de poudres constitué de 40% de bifluorure de potassium, 25% de bifluorure de sodium, 20% de sulfate de magnésium, 15% de baryte et 0,5% de BAYOWET™ FT 248. On disperse ensuite ce mélange dans de l'acide chlorhydrique comme à l'exemple 4 et forme ainsi la composition M. On procède au dépolissage de flacons de parfum comme à l'exemple 4. On constate que le rinçage est facilité par la présence de l'agent tensioactif. L'aspect du dépoli est identique à celui obtenu avec la composition L de l'exemple 4 ou avec la composition T₂.

### h) Exemple 7 : Compositions appauvries en ammonium.

On prépare des mélanges de poudres contenant 65% d'un mélange de bifluorure de potassium et de bifluorure d'ammonium, en différentes proportions, 20% de sulfate de magnésium et 15% de baryte. 1000 g de ces compositions sont versés dans 430 ml d'acide chlorhydrique à 32% puis on réalise le dépolissage de lames de verre comme à l'exemple 4. On remarque que :
- Les lames dépolies avec la composition N contenant 10% de bifluorure d'ammonium ont une valeur d de 12 mm, proche de celle obtenue avec la composition K qui ne contient pas de bifluorure d'ammonium.
- Les lames dépolies avec les compositions O ou P contenant 20 et 30% de bifluorure d'ammonium sont moins opaques.
les résultats sont rassemblés dans le tableau 6 suivant

**Tableau 6**

| Composition | % bifluorure d'ammonium dans les poudres | poids de bifluorure d'ammonium dans le bain (en kg/100 litres) | d (en mm) |
|---|---|---|---|
| K | 0 | 0 | 9 |
| N | 10 | 23 | 12 |
| O | 20 | 47 | 21 |
| P | 30 | 70 | 22 |

### i) Exemple 8 : Dépolissage dans différents acides

On reprend le mélange de poudres décrit à l'exemple 4. On verse 1000g de ce mélange dans 430 ml de différents acides à 32% dans l'eau, puis on dépolit des flacons de parfums avec les bains acides formés. Les acides utilisés sont l'acide chlorhydrique, l'acide sulfurique, l'acide nitrique, l'acide phosphorique, l'acide oxalique et l'acide citrique.

Dans tous les cas, on obtient de flacons avec un dépoli uniforme. L'opacité du flacon dépoli dans le bain d'acide chlorhydrique est équivalente à celle d'un flacon dépoli dans la composition T₂. Les flacons dépolis dans les autres acides sont légèrement moins opaques et l'opacité décroît dans l'ordre : Acide sulfurique, acide nitrique, acide phosphorique, acide citrique et acide oxalique.

### j) Exemple 9 : Procédés de dépolissage

On reprend le mélange de poudres décrit à l'exemple 4. 1000g de ce mélange sont mélangés à 430 ml d'une solution contenant de l'eau ou de l'acide chlorhydrique à différentes concentrations dans l'eau. On dépolit des lames de verre selon le protocole de l'exemple 1 et on mesure la valeur d. Après un cycle de dépolissage, seuls les bains contenant de l'acide chlorhydrique à la concentration d'au moins 20%, induisent une bonne opacité. On met ensuite en oeuvre un protocole de dépolissage à deux cycles : trempage de 15 secondes, égouttage de 15 secondes puis séchage à l'air; puis on recommence ces 3 opérations. On obtient des dépolis tout à fait satisfaisants avec le mélange de poudres selon l'invention pour tous les bains, même celui sans acide ; alors qu'aucun dépoli satisfaisant n'est obtenu avec ce procédé si on utilise la composition LERITE™ SX13 . les résultats sont rassemblés dans le tableau 7.

**Tableau 7**

| Poudres de dépolissage → | Selon invention d (en mm) | | LERITE™ SX 13 d (en mm) | |
|---|---|---|---|---|
| Concentration en HCI ↓(%) | 1 cycle | 2 cycles | 1 cycle | 2 cycles |
| 0 | >130 | 10 | >130 non dépoli | >130 non dépoli |
| 10% | >130 | ND | ND | ND |
| 15% | >130 | ND | >130 | >130 |
| 20% | 14 | ND | ND | ND |
| 32% | 9 | 10 | 10 | 9 |

## Revendications

1. Composition exempte d'acide fluorhydrique, **caractérisée en ce qu'**elle comprend de 20% à 99% en poids, de bifluorure de potassium et de 1% à 80% en poids, d'au moins un sel de cation multivalent hydrosoluble choisi parmi les sels divalents ou trivalents de calcium, de magnésium, de zinc, de fer ou d'aluminium.

2. Composition telle que définie à la revendication 1, **caractérisée en ce qu'**elle comprend aussi jusqu'à 15% en poids et de préférence, au plus 5% en poids du bifluorure d'ammonium.

3. Composition telle que définie à l'une des revendications 1 ou 2, **caractérisée en ce qu'**elle comprend du bifluorure de sodium en une proportion pondérale inférieure ou égale à celle en bifluorure de potassium à la condition que, lorsqu'elle comprend aussi du bifluorure d'ammonium, la proportion pondérale totale en ces deux bifluorures, est inférieure ou égale à celle en bifluorure de potassium.

4. Composition telle que définie à l'une des revendications 1 à 3, **caractérisée en ce qu'**elle comprend aussi de 5% à 60% en poids et plus particulièrement, de 10% à 30% en poids, d'au moins une charge insoluble dans l'eau, choisie par les produits minéraux ou organiques stables en milieu acide.

5. Composition telle que définie à la revendication 4, **caractérisée en ce** la charge insoluble est choisie parmi la baryte, le gypse, les sels fluorés insolubles, et plus particulièrement le fluorure de calcium, les fluorosilicates insolubles et plus particulièrement le fluorosilicate de calcium ou le fluorosilicate de sodium, le phosphate de calcium, le sulfate de calcium, les oxydes minéraux, en particulier les oxydes de fer, de zinc ou de titane, les sucres et leurs polymères, tels que la cellulose ou ses dérivés, la lignine, l'amidon, les polymères d'oxyde d'éthylène, les polymères d'oxyde de propylène ou les polymères d'oxyde de butylène de haut poids moléculaire; les acides gras et leurs dérivés solides à température ambiante, les polymères et résines insolubles de hauts poids moléculaires.

6. Composition telle que définie à l'une des revendications 1 à 5, **caractérisée en ce qu'**elle comprend aussi de 0,01 % à 6% en poids et plus particulièrement, de 1% à 2% en poids, d'un ou plusieurs agents tensioactifs stables en milieu acide.

7. Composition telle que définie à la revendication 6, **caractérisée en ce** l'agent tensioactif est choisi parmi les alcools gras alcoxylés, les alcools gras phosphatés, les alcools gras alcoxylés phosphatés, les copolymères d'oxyde d'éthylène et de propylène, les amides grasses ou les agents tensioactifs cationiques ou les dérivés fluorés desdits agents tensioactifs, les agents tensioactifs siliconés ou fluorosiliconés.

8. Composition telle que définie à l'une des revendications 1 à 7, **caractérisée en ce qu'**elle comprend de 1% à 60% en poids, plus particulièrement, de 5% à 30% en poids et tout particulièrement de 10% à 25% en poids d'au moins un sel de cation multivalent hydrosoluble.

9. Composition telle que définie à l'une des revendications 1 à 8, **caractérisée en ce que** le sel de cation multivalent hydrosoluble, est choisi parmi le chlorure de manganèse, le chlorure de magnésium, le sulfate de magnésium, le chlorure de calcium, le chlorure ferrique, l'alumine ou un mélange de ces composés.

10. Composition telle que définie à l'une des revendications 1 à 9, **caractérisée en ce qu'**elle comprend de 40% à 80% en poids, de bifluorure de potassium.

11. Composition telle que définie à l'une des revendications 1 à 10, **caractérisée en ce qu'**elle est sous la forme d'un mélange de poudres, sous la forme de granulés, sous la forme de pastilles ou sous la forme de galets.

12. Solution de dépolissage du verre, **caractérisée en ce qu'**elle est susceptible d'être obtenue en mélangeant entre 0,1 kg et 5 kg et, de préférence entre 0,5 kg et 5 kg, de la composition telle que définie à l'une des revendications 1 à 11, par litre d'eau ou par litre d'une solution aqueuse d'un ou plusieurs acides minéraux ou organiques, étant entendu que l'acide minéral éventuellement présent dans ladite solution aqueuse avant le mélange avec ladite composition, n'est pas de l'acide fluorhydrique.

13. Solution de dépolissage du verre, **caractérisée en ce qu'**elle est susceptible d'être obtenue en mélangeant simultanément ou successivement, de 0,1 kg à 4,95 kg de bifluorure de potassium et de 0,005 kg à 4 kg, d'au moins un sel de cation multivalent hydrosoluble choisi parmi les sels divalents ou trivalents de calcium, de magnésium, de zinc, de fer ou d'aluminium, par litre d'eau ou par litre d'une solution aqueuse d'un ou plusieurs acides minéraux ou organiques, étant entendu que l'acide minéral éventuellement présent dans ladite solution aqueuse avant le mélange avec ledit bifluorure et ledit sel de cation, n'est pas de l'acide fluorhydrique.

14. Solution de dépolissage du verre, telle que définie à la revendication 13, **caractérisée en ce qu'**elle est susceptible d'être obtenue en ajoutant aussi du bifluorure de sodium en quantité inférieure ou égale à celle du bifluorure de potassium ou jusqu'à 0,75 kg et de préférence au plus 0,25 kg de bifluorure d'ammonium ou du bifluorure de sodium et du bifluorure d'ammonium étant entendu que dans ce dernier cas, la quantité totale en ces deux bifluorures est inférieure ou égale à la quantité de bifluorure de potassium potassium et que la quantité de bifluorure d'ammonium ajoutée par litre d'eau ou par litre de solution acide est inférieure ou égale 0,75 kg et de préférence au plus 0,25 kg.

15. Solution de dépolissage du verre, telle que définie à la revendication 13 ou 14, **caractérisée en ce qu'**elle est susceptible d'être obtenue en ajoutant aussi de 0,025 kg à 3 kg et plus particulièrement de 0,05 kg à 1,5 kg d'au moins une charge insoluble dans l'eau choisie parmi les produits minéraux ou organiques stables en milieu acide.

16. Solution de dépolissage du verre, telle que définie à la revendication 14, **caractérisée en ce** la charge insoluble est choisie parmi la baryte, le gypse, les sels fluorés insolubles, et plus particulièrement le fluorure de calcium, les fluorosilicates insolubles et plus particulièrement le fuorosilicate de calcium, le phosphate de calcium, le sulfate de calcium, les oxydes minéraux, en particulier les oxydes de fer, de zinc ou de titane, les sucres et leurs polymères, tels que la cellulose ou ses dérivés, la lignine, l'amidon, les polymères d'oxyde d'éthylène, les polymères d'oxyde de propylène ou les polymères d'oxyde de butylène de haut poids moléculaire; les acides gras et leurs dérivés solides à température ambiante, les polymères et résines insolubles de hauts poids moléculaires.

17. Solution de dépolissage du verre, telle que définie à l'une des revendications 13 à 16, **caractérisée en ce qu'**elle est susceptible d'être obtenue en ajoutant aussi, de 10⁻⁵ kg à 0,3 kg et de préférence de 10⁻⁴ kg à 0,1 kg, d'un ou plusieurs agents tensioactifs stables en milieu acide.

18. Solution de dépolissage du verre, telle que définie à la revendication 17, **caractérisée en ce** l'agent tensioactif est choisi parmi les alcools gras alcoxylés, les alcools gras phosphatés, les alcools gras alcoxylés phosphatés, les copolymères d'oxyde d'éthylène et de propylène, les amides grasses ou les agents tensioactifs cationiques ou les dérivés fluorés desdits agents tensioactifs, les agents tensioactifs siliconés ou fluorosiliconés.

19. Solution de dépolissage du verre, telle que définie à l'une des revendications 13 à 18, **caractérisée en ce que** la proportion en sel de cation multivalent hydrosoluble mélangée, est de 0,005 kg à 3 kg, plus particulièrement de 0,025 kg à 1,5 kg et tout particulièrement de 0,05 kg à 1,25 kg par litre d'eau ou par litre d'une solution aqueuse d'un ou plusieurs acides minéraux ou organiques.

20. Solution de dépolissage du verre, telle que définie à l'une des revendications 13 à 19, **caractérisée en ce que** le sel de cation multivalent hydrosoluble, est choisi parmi le chlorure de manganèse, le chlorure de magnésium, le sulfate de magnésium, le chlorure de calcium, le chlorure ferrique, l'alumine ou un mélange de ces composés.

21. Solution de dépolissage du verre, telle que définie à l'une des revendications 13 à 20, **caractérisée en ce que** la proportion en bifluorure de potassium mélangé, est de 0,2 kg à 4 kg par litre d'eau ou par litre d'une solution aqueuse d'un ou plusieurs acides minéraux ou organiques.

22. Solution de dépolissage du verre telle que définie à l'une des revendications 12 à 21, **caractérisée en ce** ladite solution aqueuse d'un ou plusieurs acides minéraux ou organiques est choisie parmi les solutions aqueuses d'acide chlorhydrique, d'acide sulfurique, d'acide phosphorique, d'acide nitrique, d'acide fluorosulfonique, d'acide citrique, d'acide tartrique, d'acide oxalique, d'acide acétique, d'acide propionique, d'acide succinique ou d'un de leurs mélanges.

23. Solution de dépolissage du verre telle que définie à la revendication 22, **caractérisée en ce** ladite solution aqueuse d'un ou plusieurs acides minéraux ou organiques est une solution aqueuse d'acide chlorhydrique.

24. Solution de dépolissage du verre telle que définie à l'une des revendications 12 à 23, sous forme d'une pâte non coulante, **caractérisée en ce qu'**elle contient une quantité efficace d'un ou plusieurs agents épaississants ou liants stables aux acides.

25. Procédé de dépolissage de verre **caractérisé en ce que** la surface de l'objet en verre est mise en contact pendant en environ 0,5 s à environ 300 s avec la solution telle que définie à l'une des revendications 12 à 24 puis l'objet est rincé puis séché.

26. Variante du procédé selon la revendication 25, selon laquelle la séquence de mise en contact puis de rinçage est répété plusieurs fois, plus particulièrement 2 à 4 fois.

## Patentansprüche

1. Flußsäurefreie Zusammensetzung, **dadurch gekennzeichnet, daß** sie 20 bis 99 Gew.-% Kaliumbifluorid und 1 bis 80 Gew.-% mindestens eines wasserlöslichen Salzes eines mehrwertigen Kations, das unter zwei- oder dreiwertigen Calcium-, Magnesium-, Zink-, Eisen- oder Aluminiumsalzen ausgewählt ist, enthält.

2. Zusammensetzung nach Anspruch 1, **dadurch gekennzeichnet, daß** sie außerdem bis zu 15 Gew.-% und vorzugsweise höchstens 5 Gew.-% Ammoniumbifluorid enthält.

3. Zusammensetzung nach Anspruch 1 oder 2, **dadurch gekennzeichnet, daß** sie Natriumbifluorid in einem Gewichtsanteil, der kleiner oder gleich dem Gewichtsanteil an Kaliumbifluorid ist, enthält, mit der Maßgabe, daß für den Fall, daß sie außerdem Ammoniumbifluorid enthält, der Gesamtgewichtsanteil dieser beiden Bifluoride kleiner oder gleich dem Gewichtsanteil an Kaliumbifluorid ist.

4. Zusammensetzung nach einem der Ansprüche 1 bis 3, **dadurch gekennzeichnet, daß** sie außerdem 5 bis 60 Gew.-% und insbesondere 10 bis 30 Gew.-% mindestens eines wasserunlöslichen Füllstoffs, der unter in saurem Milieu stabilen anorganischen oder organischen Produkten ausgewählt ist, enthält.

5. Zusammensetzung nach Anspruch 4, **dadurch gekennzeichnet, daß** der unlösliche Füllstoff unter Baryt, Gips, unlöslichen Fluorsalzen und insbesondere Calciumfluorid, unlöslichen Fluorosilicaten und insbesondere Calciumfluorosilicat oder Natriumfluorosilicat, Calciumphosphat, Calciumsulfat, anorganischen Oxiden, insbesondere Eisen-, Zink- oder Titanoxiden, Zuckern und Polymeren davon, wie Cellulose und Derivate davon, Lignin, Stärke, Ethylenoxidpolymeren, Propylenoxidpolymeren oder Butylenoxidpolymeren mit hohem Molekulargewicht, Fettsäuren und Derivaten davon, die bei Umgebungstemperatur fest sind, und unlöslichen Polymeren und Harzen mit hohem Molekulargewicht ausgewählt ist.

6. Zusammensetzung nach einem der Ansprüche 1 bis 5, **dadurch gekennzeichnet, daß** sie außerdem 0,01 bis 6 Gew.-% und insbesondere 1 bis 2 Gew.-% eines oder mehrerer in saurem Milieu stabiler Tenside enthält.

7. Zusammensetzung nach Anspruch 6, **dadurch gekennzeichnet, daß** das Tensid unter alkoxylierten Fettalkoholen, phosphatierten Fettalkoholen, phosphatierten alkoxylierten Fettalkoholen, Ethylenoxid/Propylenoxid-Copolymeren, Fettsäureamiden oder kationischen Tensiden oder fluorierten Derivaten dieser Tenside und Silikon- oder Fluorsilikontensiden ausgewählt ist.

8. Zusammensetzung nach einem der Ansprüche 1 bis 7, **dadurch gekennzeichnet, daß** sie 1 bis 60 Gew.-%, insbesondere 5 bis 30 Gew.-% und ganz besonders 10 bis 25 Gew.-% mindestens eines wasserlöslichen Salzes eines mehrwertigen Kations enthält.

9. Zusammensetzung nach einem der Ansprüche 1 bis 8, **dadurch gekennzeichnet, daß** das wasserlösliche Salz eines mehrwertigen Kations unter Manganchlorid, Magnesiumchlorid, Magnesiumsulfat, Calciumchlorid, Eisen(III)-chlorid, Aluminiumoxid oder einem Gemisch dieser Verbindungen ausgewählt ist.

10. Zusammensetzung nach einem der Ansprüche 1 bis 9, **dadurch gekennzeichnet, daß** sie 40 bis 80 Gew.-% Kaliumbifluorid enthält.

11. Zusammensetzung nach einem der Ansprüche 1 bis 10, **dadurch gekennzeichnet, daß** sie in Form einer Mischung von Pulvern, in Granulatform, in Form von Pellets oder in Form von Kieseln vorliegt.

12. Glasmattierungslösung, **dadurch gekennzeichnet, daß** sie dadurch erhältlich ist, daß man zwischen 0,1 kg und 5 kg und vorzugsweise zwischen 0,5 kg und 5 kg der Zusammensetzung nach einem der Ansprüche 1 bis 11 pro Liter Wasser oder pro Liter einer wäßrigen Lösung einer oder mehrerer anorganischer oder organischer Säuren mischt, wobei es sich bei der in der wäßrigen Lösung vor dem Mischen mit der Zusammensetzung gegebenenfalls vorhandenen anorganischen Säure nicht um Flußsäure handelt.

13. Glasmattierungslösung, **dadurch gekennzeichnet, daß** sie dadurch erhältlich ist, daß man gleichzeitig oder sukzessive 0,1 kg bis 4,95 kg Kaliumbifluorid und 0,005 kg bis 4 kg mindestens eines wasserlöslichen Salzes eines mehrwertigen Kations, das unter zwei- oder dreiwertigen Calcium-, Magnesium-, Zink-, Eisen- oder Aluminiumsalzen ausgewählt ist, pro Liter Wasser oder pro Liter einer wäßrigen Lösung einer oder mehrerer anorganischer oder organischer Säuren mischt, wobei es sich bei der in der wäßrigen Lösung vor dem Mischen mit der Zusammensetzung gegebenenfalls vorhandenen anorganischen Säure nicht um Flußsäure handelt.

14. Glasmattierungslösung nach Anspruch 13, **dadurch gekennzeichnet, daß** sie dadurch erhältlich ist, daß man außerdem Natriumbifluorid in einem Gewichtsanteil, der kleiner oder gleich dem Gewichtsanteil an Kaliumbifluorid ist, oder bis zu 0,75 kg und vorzugsweise höchstens 0,25 kg Ammoniumbifluorid bzw. Natriumbifluorid und Ammoniumbifluorid zusetzt, wobei in letzterem Fall der Gesamtgewichtsanteil dieser beiden Bifluoride kleiner oder gleich der Menge von Kaliumbifluorid ist und die pro Liter Säurelösung zugesetzte Ammoniumbifluoridmenge kleiner gleich 0,75 kg ist und vorzugsweise höchstens 0,25 kg beträgt.

15. Glasmattierungslösung nach Anspruch 13 oder 14, **dadurch gekennzeichnet, daß** sie dadurch erhältlich ist, daß man außerdem 0,025 kg bis 3 kg und insbesondere 0,05 kg bis 1,5 kg mindestens eines wasserunlöslichen Füllstoffs, der unter in saurem Milieu stabilen anorganischen oder organischen Produkten ausgewählt ist, zusetzt.

16. Glasmattierungslösung nach Anspruch 13, **dadurch gekennzeichnet, daß** der unlösliche Füllstoff unter Baryt, Gips, unlöslichen Fluorsalzen und insbesondere Calciumfluorid, unlöslichen Fluorosilicaten und insbesondere Calciumfluorosilicat, Calciumphosphat, Calciumsulfat, anorganischen Oxiden, insbesondere Eisen-, Zink- oder Titanoxiden, Zuckern und Polymeren davon, wie Cellulose und Derivate davon, Lignin, Stärke, Ethylenoxidpolymeren, Propylenoxidpolymeren oder Butylenoxidpolymeren mit hohem Molekulargewicht, Fettsäuren und Derivaten davon, die bei Umgebungstemperatur fest sind, und unlöslichen Polymeren und Harzen mit hohem Molekulargewicht ausgewählt ist.

17. Glasmattierungslösung nach einem der Ansprüche 13 bis 16, **dadurch gekennzeichnet, daß** sie dadurch erhältlich ist, daß man außerdem 10⁻⁵ kg bis 0,3 kg und vorzugsweise 10⁻⁴ kg bis 0,1 kg eines oder mehrerer in saurem Milieu stabiler Tenside zusetzt.

18. Glasmattierungslösung nach Anspruch 17, **dadurch gekennzeichnet, daß** das Tensid unter alkoxylierten Fettalkoholen, phosphatierten Fettalkoholen, phosphatierten alkoxylierten Fettalkoholen, Ethylenoxid/Propylenoxid-Copolymeren, Fettsäureamiden oder kationischen Tensiden oder fluorierten Derivaten dieser Tenside und Silikon- oder Fluorsilikontensiden ausgewählt ist.

19. Glasmattierungslösung nach einem der Ansprüche 13 bis 18, **dadurch gekennzeichnet, daß** der Anteil an eingemischtem wasserlöslichem Salz eines mehrwertigen Kations 0,005 kg bis 3 kg, insbesondere 0,025 kg bis 1,5 kg und ganz besonders 0,05 kg bis 1,25 kg pro Liter Wasser oder pro Liter einer wäßrigen Lösung einer oder mehrerer anorganischer oder organischer Säuren beträgt.

20. Glasmattierungslösung nach einem der Ansprüche 13 bis 19, **dadurch gekennzeichnet, daß** das wasserlösliche Salz eines mehrwertigen Kations unter Manganchlorid, Magnesiumchlorid, Magnesiumsulfat, Calciumchlorid, Eisen(III)-chlorid, Aluminiumoxid oder einem Gemisch dieser Verbindungen ausgewählt ist.

21. Glasmattierungslösung nach einem der Ansprüche 13 bis 20, **dadurch gekennzeichnet, daß** der Anteil an eingemischtem Kaliumbifluorid 0,2 kg bis 4 kg pro Liter Wasser oder pro Liter einer wäßrigen Lösung einer oder mehrerer anorganischer oder organischer Säuren beträgt.

22. Glasmattierungslösung nach einem der Ansprüche 12 bis 21, **dadurch gekennzeichnet, daß** die wäßrige Lösung einer oder mehrerer anorganischer oder organischer Säuren unter wäßrigen Lösungen von Salzsäure, Schwefelsäure, Phosphorsäure, Salpetersäure, Fluorsulfonsäure, Citronensäure, Weinsäure, Oxalsäure, Essigsäure, Propionsäure, Bernsteinsäure oder eines Gemischs davon ausgewählt ist.

23. Glasmattierungslösung nach Anspruch 22, **dadurch gekennzeichnet, daß** es sich bei der wäßrigen Lösung einer oder mehrerer anorganischer oder organischer Säuren um eine wäßrige Salzsäurelösung handelt.

24. Glasmattierungslösung nach einem der Ansprüche 12 bis 23 in Form einer nichtfließenden Paste, **dadurch gekennzeichnet, daß** sie eine wirksame Menge eines oder mehrerer säurestabiler Verdickungs- oder Bindemittel enthält.

25. Glasmattierungsverfahren, **dadurch gekennzeichnet, daß** man die Oberfläche des Glasgegenstands über einen Zeitraum von etwa 0,5 s bis etwa 300 s mit einer Lösung nach einem der Ansprüche 12 bis 24 in Berührung bringt, dann den Gegenstand abspült und dann trocknet.

26. Verfahren nach Anspruch 25, bei dem man die Sequenz aus Inberührungbringen und nachfolgendem Abspülen mehrmals wiederholt, insbesondere 2- bis 4mal.

## Claims

1. Composition free of hydrofluoric acid, **characterized in that** it contains from 20% to 99% by weight of potassium difluoride and from 1% to 80% by weight of at least one water-soluble salt of a polyvalent cation chosen from divalent or trivalent calcium, magnesium, zinc, iron or aluminium salts.

2. Composition as defined in Claim 1, **characterized in that** it also contains up to 15% by weight and preferably at most 5% by weight of ammonium difluoride.

3. Composition as defined in either of Claims 1 and 2, **characterized in that** it contains sodium difluoride in a proportion by weight of less than or equal to that of potassium difluoride on condition that, when it also contains ammonium difluoride, the total proportion by weight of these two difluorides is less than or equal to that of potassium difluoride.

4. Composition as defined in one of Claims 1 to 3, **characterized in that** it also contains from 5% to 60% by weight and more particularly from 10% to 30% by weight of at least one water-insoluble filler chosen from mineral or organic substances stable in acid medium.

5. Composition as defined in Claim 4, **characterized in that** the insoluble filler is chosen from baryte, gypsum, insoluble fluorine-containing salts and more particularly calcium fluoride, insoluble fluorosilicates and more particularly calcium fluorosilicate or sodium fluorosilicate, calcium phosphate, calcium sulphate, mineral oxides, particularly iron, zinc or titanium oxides, sugars and their polymers, such as cellulose or its derivatives, lignin, starch, high-molecular-weight ethylene oxide polymers, propylene oxide polymers or butylene oxide polymers, fatty acids and their derivatives which are solid at room temperature, and high-molecular-weight insoluble polymers and resins.

6. Composition as defined in one of Claims 1 to 5, **characterized in that** it also contains from 0.01% to 6% by weight, and more particularly from 1% to 2% by weight, of one or more surfactants stable in acid medium.

7. Composition as defined in Claim 6, **characterized in that** the surfactant is chosen from alkoxylated fatty alcohols, phosphate-containing fatty alcohols, phosphate-containing alkoxylated fatty alcohols, ethylene oxide/propylene oxide copolymers, fatty amides or cationic surfactants or fluorinated derivatives of the said surfactants, and silicone or fluorosilicone surfactants.

8. Composition as defined in one of Claims 1 to 7, **characterized in that** it contains from 1% to 60% by weight, more particularly from 5% to 30% by weight and most particularly from 10% to 25% by weight, of at least one water-soluble salt of a polyvalent cation.

9. Composition as defined in one of Claims 1 to 8, **characterized in that** the water-soluble salt of a polyvalent cation is chosen from manganese chloride, magnesium chloride, magnesium sulphate, calcium chloride, ferric chloride and alumina, or a mixture of these compounds.

10. Composition as defined in one of Claims 1 to 9, **characterized in that** it contains from 40% to 80% by weight of potassium difluoride.

11. Composition as defined in one of Claims 1 to 10, **characterized in that** it is in the form of a powder blend, in the form of granules, in the form of pellets or in the form of pebbles.

12. Glass etching solution, **characterized in that** it can be obtained by mixing between 0.1 kg and 5 kg, and preferably between 0.5 kg and 5 kg, of the composition as defined in one of Claims 1 to 11, per litre of water or per litre of an aqueous solution of one or more mineral or organic acids, it being understood that any mineral acid present in the said aqueous solution before mixing with the said composition is not hydrofluoric acid.

13. Glass etching solution, **characterized in that** it can be obtained by mixing, simultaneously or successively, from 0.1 kg to 4.95 kg of potassium difluoride and from 0.005 kg to 4 kg of at least one water-soluble salt of a polyvalent cation chosen from divalent or trivalent calcium, magnesium, zinc, iron or aluminium salts, per litre of water or per litre of an aqueous solution of one or more mineral or organic acids, it being understood that any mineral acid present in the said aqueous solution before mixing with the said difluoride and the said cation salt is not hydrofluoric acid.

14. Glass etching solution, as defined in Claim 13, **characterized in that** it can be obtained by also adding sodium difluoride in an amount which is less than or equal to the amount of potassium difluoride or up to 0.75 kg and preferably at most 0.25 kg of ammonium difluoride or sodium difluoride and ammonium difluoride, it being understood that, in the latter case, the total amount of these two difluorides is less than or equal to the amount of potassium difluoride and that the amount of ammonium difluoride added per litre of water or per litre of acid solution is less than or equal to 0.75 kg and preferably at most 0.25 kg.

15. Glass etching solution, as defined in Claim 13 or 14, **characterized in that** it can be obtained by also adding from 0.025 kg to 3 kg and more particularly from 0.05 kg to 1.5 kg of at least one water-insoluble filler chosen from mineral or organic substances stable in acid medium.

16. Glass etching solution, as defined in Claim 14, **characterized in that** the insoluble filler is chosen from baryte, gypsum, insoluble fluorine-containing salts, and more particularly calcium fluoride, insoluble fluorosilicates and more particularly calcium fluorosilicate, calcium phosphate, calcium sulphate, mineral oxides, particularly iron, zinc or titanium oxides, sugars and their polymers, such as cellulose or its derivatives, lignin, starch, high-molecular-weight ethylene oxide polymers, propylene oxide polymers or butylene oxide polymers, fatty acids and their derivatives which are solid at room temperature, and high-molecular-weight insoluble polymers and resins.

17. Glass etching solution, as defined in one of Claims 13 to 16, **characterized in that** it can be obtained by also adding from 10⁻⁵ kg to 0.3 kg and preferably from 10⁻⁴ kg to 0.1 kg of one or more surfactants stable in acid medium.

18. Glass etching solution, as defined in Claim 17, **characterized in that** this surfactant is chosen from alkoxylated fatty alcohols, phosphate-containing fatty alcohols, phosphate-containing alkoxylated fatty alcohols, ethylene oxide/propylene oxide copolymers, fatty amides or cationic surfactants or fluorinated derivatives of the said surfactants, and silicone or fluorosilicone surfactants.

19. Glass etching solution, as defined in one of Claims 13 to 18, **characterized in that** the proportion of water-soluble salt of a polyvalent cation mixed is from 0.005 kg to 3 kg more particularly from 0.025 kg to 1.5 kg and most particularly from 0.05 kg to 1.25 kg, per litre of water or per litre of an aqueous solution of one or more mineral or organic acids.

20. Glass etching solution, as defined in one of Claims 13 to 19, **characterized in that** the water-soluble salt of a polyvalent cation is chosen from manganese chloride, magnesium chloride, magnesium sulphate, calcium chloride, ferric chloride, alumina or a mixture of these compounds.

21. Glass etching solution, as defined in one of Claims 13 to 20, **characterized in that** the proportion of potassium difluoride mixed is from 0.2 kg to 4 kg per litre of water or per litre of an aqueous solution of one or more mineral or organic acids.

22. Glass etching solution, as defined in one of Claims 12 to 21, **characterized in that** the said aqueous solution of one or more mineral or organic acids is chosen from aqueous solutions of hydrochloric acid, sulphuric acid, phosphoric acid, nitric acid, fluorosulphonic acid, citric acid, tartaric acid, oxalic acid, acetic acid, propionic acid and succinic acid, or of one of their mixtures.

23. Glass etching solution as defined in Claim 22, **characterized in that** the said aqueous solution of one or more mineral or organic acids is an aqueous hydrochloric acid solution.

24. Glass etching solution as defined in one of Claims 12 to 23, in the form of a non-flowing paste, **characterized in that** it contains an effective amount of one or more acid-stable thickeners or binders.

25. Glass etching process, **characterized in that** the surface of the glass object is brought into contact with the solution as defined in one of Claims 12 to 24 for approximately 0.5 s to approximately 300 s, and then the object is rinsed and then dried.

26. Variant of the process according to Claim 25, in which the contacting/rinsing sequence is repeated several times, more particularly 2 to 4 times.
